Europäisches Patentamt

(19) ))) European Patent Office    (11) Publication number: **0 026 431**
                                        **B1**
Office européen des brevets

(12)                    EUROPEAN PATENT SPECIFICATION

(45) Date of publication of patent specification: **14.12.83**    (51) Int. Cl.³: **F 16 L 11/12, F 16 L 57/00**

(21) Application number: **80105698.7**

(22) Date of filing: **23.09.80**

(54) Fireguard for hose assembly.

(30) Priority: **01.10.79 US 80567**

(43) Date of publication of application:
**08.04.81 Bulletin 81/14**

(45) Publication of the grant of the patent:
**14.12.83 Bulletin 83/50**

(84) Designated Contracting States:
**BE DE FR GB IT NL SE**

(56) References cited:
    CH - A - 144 375
    DE - A - 2 227 302
    DE - B - 1 078 824
    DE - U - 7 903 962
    FR - A - 2 261 692
    US - A - 2 273 393
    US - A - 3 004 779
    US - A - 3 109 460
    US - A - 4 033 612
    US - A - 4 063 757
    US - A - 4 181 157

(73) Proprietor: **STRATOFLEX, INC.**
    **220 Roberts Cut-Off**
    **Fort Worth, Texas 76114 (US)**

(72) Inventor: **Cooke, Horise Milton**
    **3706 Redbud Drive**
    **Weatherford Texas 76086 (US)**

(74) Representative: **Goddar, Heinz J., Dr. et al,**
    **FORRESTER & BOEHMERT Widenmayerstrasse**
    **4/I**
    **D-8000 München 22 (DE)**

Courier Press, Leamington Spa, England.

Fireguard for hose assembly

The invention relates to an apparatus comprising a hose and fitting assembly, the assembly at least including one fitting attached to an end of the hose, the fitting including an inner nipple and an outer socket.

Hydraulic and pneumatic hose assemblies are well-known and have been in use for many years. A typical assembly of this character includes a length of hose and a connector for fitting at each end for coupling the hose to other apparatus. This includes a tube or lining that is usually surrounded by one or more layers of reinforcement. The tube is usually made of rubber, a synthetic rubber compound, or a plastic material. When provided with a reinforcement, such an assembly is capable of sustaining relatively high pressures for long periods of time.

The invention is particularly concerned with a fire guard for a length of hose. There are numerous uses for hose, wherein there is a fire hazard, and in such instances it is essential that the hose continues to function for a period of time. For example, such a hose may be connected to control the blow-out-preventer of an oil rig, or it may be connected in a control function of an aircraft. If a fire were to occur in either installation, it it essential that the controls continue to operate until fire is extinguished or brought under control.

DE—B—1078824 discloses a fire guard formed of a layer of asbestos which is covered by a silicone rubber. The silicone rubber layer functions as an oil-proof coating over the asbestos.

This fire guard according to the state of the art has the serious draw-back, that the silicone rubber alone would not form a good heat resistance layer, because it would immediately flake off when exposed to high temperature. The US—A—4 063 757 shows a heat protecting jacket without a layer of insulating material underneath. This jacket does not extend over any part of the fitting and therefore the protection against heat is not satisfactory.

In US—A—3 109 460 a hose covered with a silicone-pressure-sensitive adhesive and an aluminium foil tape is provided. The aluminium foil tape is to reflect heat. Nevertheless, it would not appear to act as a retainer for the silicone in the event the silicone was to be converted by heat to a powderous ash.

The overlapping nature of the aluminium foil tape would apparently not provide adequate physical protection and containment for the silicone. Furthermore, there is no indication in this prior art patent, that the silicone and the aluminium tape extend over a fitting attached to the hose.

When a hose and fitting assembly is subjected to a high temperature as during fire, the connection between the fitting and the hose in an unprotected assembly is normally the first part of the assembly to fail. This is probably due to the following reason: The hose is secured to the fitting by a compression connection between the nipple and the socket of the fitting. When the flexible hose material becomes heated by the fire the hose, which is normally made of a plastic or synthetic rubber, starts to lose its strength and becomes soft. When internal pressures applied within the interior of the hose and fitting, the hose is then more easily forced off of the fitting because the compression connection between them has deteriorated.

It is therefore the task of the invention, to provide a fire guard which overcomes the deficiencies of the prior art fire guards.

This problem is solved by a fire guard in accordance with the present invention, which is characterised in that a tubular silicone compound surrounds the hose and fitting assembly to be protected, said compound having an internal diameter that fits around the hose and fitting assembly, a flexible metal tubing substantially covering said tubular layer, said layer and said tubing substantially covering such socket, and means partially covering and clamping said layer and said tubing to said socket. In the event the hose assembly is subjected to a high temperature, as during a fire, the silicone compound insulates the hose from the heat during the initial period of the high temperature. If the high temperature condition continues, the silicone compounds decomposes to a layer of silica ash around the hose assembly. The ashes are held in place and prevented from crumbling and falling off the hose by the shroud that surrounds it, and the ash forms a layer of heat insulation which is at least as effective as the layer of the silicone compound, and the ash continues to protect the hose assembly for an extended period of time.

The clamping means preferably comprises an additional layer of the silicone compound within an outer collar.

The foregoing and other objects and advantages of the present invention will be better understood from the following detailed description taken in conjunction with the accompanying figures of the drawings, wherein:

Fig. 1 shows a fireguard during assembly with a hose and fitting;

Fig. 2 is similar to Fig. 1 but shows the completed assembly; and

Fig. 3 shows the condition of the fireguard after exposure to high heat.

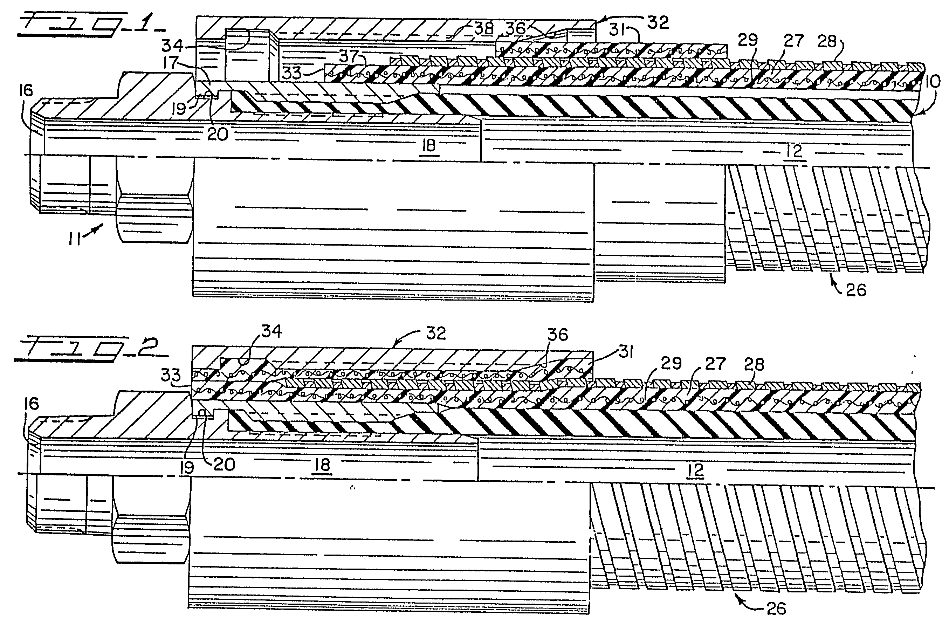

The apparatus illustrated in Fig. 1 includes an assembly including a length of hose 10 and a fitting 11 attached to one end of the hose 10. The other end (not shown) of the hose 10 may have a fitting similar to the fitting 11 attached thereto. The hose 10 includes a tube or liner 12, which may have a reinforcing layer (not illustrated) embedded in it or surrounding it. The liner 12 may consist of a rubber, synthetic rubber, plastic or teflon (registered Trade Mark) material, for example, and if a reinforcing layer is provided it usually consists of one or more layers of woven or braided wire or fabric.

The fitting 11 may be any conventional type, and in the present example it includes a tubular nipple 16 and an outer socket 17. The nipple 16 has an insert portion 18 that is inserted into the end of the hose 10, and the socket 17 is positioned coaxially with the insert portion 18 and around the end of the hose 10. The socket 17, in the example illustrated in the drawings, is deformed radially inwardly as by a crimping or swaging operation, and an internal flange 19 of the socket 17 extends into a radial groove 20 of the nipple 16 in order to secure the socket 17 to the nipple. The portion of the hose 10 between the socket and the nipple is tightly compressed between these parts in order to secure the hose 10 to the fitting 11 and also to form a fluid tight seal between the liner 12 and the outer surface of the tubular insert portion 18.

The apparatus of Fig. 1 further includes a fireguard 26 in accordance with the present invention, the fireguard comprising a tubular layer 27 of an insulating material and an outer cover or shroud 28 that surrounds the insulating layer 27. The insulating layer 27 is comprised of a silicone compound preferably polysiloxane, and a type of reinforcement 29 may be embedded in the layer 27. The reinforcement 29 may be a braided, woven or plied binder, for example. The outer shroud or cover 28 is flexible metal tubing. A preferred construction comprises a spirally wound strip, the adjacent edges of each turn of the strip being interlocked with the next adjacent turns but the adjacent turns being somewhat movable relative to each other. Thus the hose 10, with the fireguard 26 thereon, may be bent when desired.

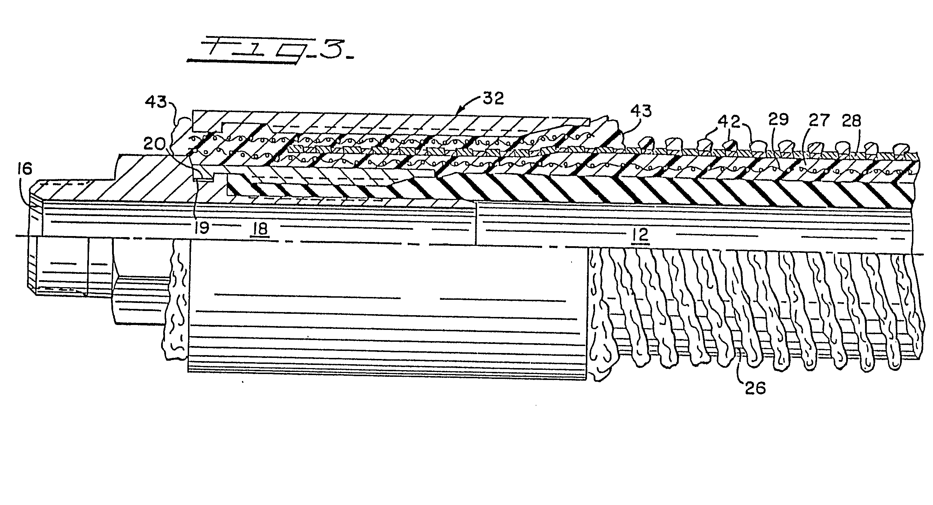

It is preferred that the fireguard be provided with means to secure the layer 27 to the fitting and to further protect the hose and fitting assembly in the area where the fitting is secured to the hose 10. Such means comprises an additional tubular layer 31 which is positioned around the portion of the fireguard 26 which surrounds the socket 17. To secure the fireguard 26 and the layer 31 to the fitting 11, a sleeve or collar 32 is positioned over the layer 31 and is secured to it by suitable means. In the present example, the inner diameter of the collar 32 is initially greater than the outer diameter of the layer 31, and the collar 32 is secured to the other parts of the assembly as by a crimping or swaging process which reduces the diameter of the sleeve to the dimensions shown in Fig. 2, where the collar 32 tightly compresses the layer 31 and holds it and the fireguard 26 on the fitting.

The layer 27 and the shroud 28 may be separately formed and the shroud slipped over the layer 27 prior to assembly of the fireguard with the hose, or the layer 27 may be molded to the shroud to form a one-piece construction. The specific example disclosed herein is the former construction. In Fig. 1, the shroud 28 has been mounted on the layer 27 as by pushing and screwing the shroud on. While the shroud 28 is shown as stopping short of the end of the layer 27, the ends of the shroud and layer may be substantially flush. To protect the connection between the hose and the fitting, the layer 27 extends over the fitting and it is secured to the fitting. Fig. 1 shows an initial step in the assembly of the fireguard 26 with the hose 10. The guard 26 is moved toward the left as seen in Fig. 1 and in the fully assembled position, the forward end 33 of the layer 27 is generally aligned with the forward end of the socket 17 (see Fig. 2). The layer 31 and the collar 32 are positioned over the end of the guard and over the socket 17. With reference to Figs. 1 and 2, an internal recess 34 may be formed in the collar 32 around the exposed end of portion 37 of the layer 27, although this is not necessary, and the layer 31 is compressed into the recess 34 when the collar 32 is deformed inwardly. At the other end of the collar 32, a slanted and internally recessed portion 36 may be provided to reduce the stress on the guard and on the hose when these parts are bent relative to the collar 32. Annular teeth 38 may also be provided on the interior of the collar to improve the connection with the layer 31.

In normal temperature environments, the hose and fitting assembly performs like any other such assembly. If the structure shown in Fig. 2 is exposed to heat, the layers 27 and 31 form heat insulation layers which protect the hose 10. If the ambient temperature becomes quite high, as during a fire, the silicone compound comprising the layers 27 and 31 decomposes and forms silica ash if the heat persists for more than a few minutes. The ash has a flaky dust-like composition. The silicone compound expands somewhat as it decomposes and it may be extruded between the adjacent coils of the shroud 28 as indicated by the reference numeral 42 in Fig. 3, but the main portion of the layer 27 is held in place by the shroud 28 and, where one is provided, by the reinforcement-binder 29. Further, the collar 32 serves to hold the layer 31 and the exposed forward end portion 37 of the layer 27 in place although a portion of the silicone compound may be extruded from both ends of the collar 32 as indicated at 43.

The above-mentioned ash forms an excellent heat insulator which continues to protect the hose 10 for an extended period of time, in spite of the continued presence of the high temperature. Due to this heat protection by the fireguard, the hose 10 is capable of holding a high pressure fluid, and the connection between the hose and the fitting 11 remains intact. Consequently, the hose assembly continues to be operable and it performs its functions in spite of a high temperature condition such as the presence of a fire.

The layer 27 is made of a silicone compound which will decompose to a silica ash in the presence of high heat as described. A preferred silicone compound is polysiloxane which is presently on the market and used as a fireguard for hose but without a shroud and without a protector for a fitting as described herein. A specific example of a silicone compound suitable for practising the invention is heat cured dimethylsiloxane elastomeric polymer reinforced with silica fillers, but of course the invention is not restricted to the use of this specific example.

## Claims

1. Apparatus comprising a hose (10) and fitting (11) assembly, the assembly including at least one fitting attached to an end of the hose, the fitting including an inner nipple (16) and an outer socket (17), said apparatus being characterized in that a tubular silicone heat insulating compound (27) surrounds the hose and fitting assembly to be protected, said compound (27) having an internal diameter that fits around the hose and fitting assembly, a flexible metal tubing (28) substantially covering said tubular layer (27), said layer (27) and said tubing (28) substantially covering said socket, and means (32) partially covering and clamping said layer (27) and said tubing (28) to said socket.

2. Apparatus as in Claim 1, characterized in that said clamping means (32) comprises a tubular collar, and further including an additional outer layer (31) of silicone heat insulating compound between said collar (32) and the outside of said shroud (28) and said tubular layer (27).

3. Apparatus as in Claim 1, or 2, characterized in that said silicone compound comprises polysiloxane.

4. Apparatus as in Claim 2, wherein said hose includes a flexible resilient material which is attached between said nipple (16) and said socket (17), said collar (32) and said additional outer layer (27) enclosing a portion of said fitting, characterized in that said collar (32) is attached to said fitting and protects said attachment.

5. A method of assembling a hose (10), a fitting (11) and a fireguard, the fireguard including a length of a tubular silicone compound (27), a length of a metal shroud (28), and a collar (32), comprising the steps of fastening a fitting (11) to an end of the hose (10), slipping the lengths of the silicone compound (27) and the shroud (28) over the hose (10), sliding the shroud (28) and the silicone compound at least partially over the fitting (11), positioning the collar (32) around the fitting (11) and the shroud (28), and positioning a layer of silicone compound between said shroud and said collar, and tightly securing said collar (32) to said shroud (28) and to said fitting (11).

## Revendications

1. Appareil constitué par un ensemble d'un tuyau souple (10) et d'un raccord (11), l'ensemble comprenant au moins un raccord fixé à une extrémité du tuyau souple, le raccord comprenant un embout interne (16) et une douille externe (17), cet appareil étant caractérisé en ce qu'un composé tubulaire (27) de silicone thermiquement isolant entoure l'ensemble de tuyau souple et de raccord devant être protégé, ledit composé (27) ayant un diametre interne qui s'ajuste autour de l'ensemble de tuyau souple et de raccord, un tubage souple (28) en métal recouvrant à peu près ladite couche tubulaire (27), ladite couche (27) et ledit tubage (28) recouvrant à peu près ladite douille, et des moyens (32) recouvrant partiellement et serrant ladite couche (27) et ledit tubage (28) sur ladite douille.

2. Appareil suivant la revendication 1, caractérisé en ce que lesdits moyens de serrage (32) sont constitués par une bague tubulaire et en ce qu'il comprend en outre une couche externe supplémentaire (31) en un composé de silicone thermiquement isolant entre ladite bague (32) et l'extérieur dudit revêtement (28) et ladite couche tubulaire (27).

3. Appareil suivant la revendication 1 ou 2, caractérisé en ce que ledit composé de silicone est constitué par du polysiloxane.

4. Appareil suivant la revendication 2, dans lequel ledit tuyau souple comprend un matériau souple élastique qui est fixé entre ledit embout (16) et ladite douille (17), ladite bague (32) et ladite couche supplémentaire externe (27) enfermant une partie dudit raccord, caractérisé en ce que ladite bague (32) est fixée sur ledit raccord et protège ladite fixation.

5. Procédé pour assembler un tuyau souple (10), un raccord (11) et une protection contre le feu, la protection contre le feu comprenant une longueur d'un composé tubulaire (27) de silicone, une longueur d'un revêtement en métal (28) et une bague (32), comprenant les phases consistant à fixer un raccord (11) sur une extrémité du tuyau souple (10), à glisser la longueur du composé de silicone (27) et du revêtement (28) par-dessus le tuyau souple (10), à faire glisser le revêtement (28) et le composé de silicone au moins partiellement par-dessus le raccord (11), à positionner la bague (32) autour du raccord (11) et du revêtement (28), et à positionner une couche du composé de silicone entre ledit revêtement et ladite bague, et à fixer de façon serrée ladite bague (32) sur ledit revêtement (28) et ledit raccord (11).

## Patentansprüche

1. Vorrichtung, die einen Schlauch (10) und eine Schlauchendgarniturbaugruppe (11) aufweist, wobei die Baugruppe mindestens ein an einem Schlauchende befestigtes Verbindungsstück umfaßt, wobei das Verbindungsstück einen inneren Nippel (16) und eine äußere Hülse (17) umfaßt, wobei die Verbindung dadurch gekennzeichnet ist, daß eine rohrförmige wärmeisolierende Siliziumverbindung en Schlauch und die zu schützende Schlauchendgarniturbaugruppe umgibt, daß diese Verbindung einem um den Schlauch und die Schlauchendgarniturbaugruppe passenden Innendurchmesser besitzt, daß ein flexibles Metallrohr (28) die rohrförmige Schicht (27) im wesentlichen bedeckt; und daß Einrichtungen (32) teilweise die Schicht (27) und das Rohr (28) bedecken und an der Hülse festklemmen.

2. Vorrichtung gemäß Anspruch 1, dadurch gekennzeichnet, daß die Klemmeinrichtung (32) einen rohrförmigen Ring und ferner eine zusätzliche Außenschicht (31) aus einer wärmeisolierenden Siliziumverbindung zwischen dem Ring (32) und der Außenseite der Verkleidung (28) und der rohrförmigen Schicht (27) umfaßt.

3. Vorrichtung gemäß Anspruch 1 oder 2, dadurch gekennzeichnet, daß die Siliziumverbindung Polysiloxan aufweist.

4. Verfahren gemäß Anspruch 2, wobei der Schlauch ein flexibles elastisches Material umfaßt, das zwischen dem Nippel (16) und der Hülse (17) befestigt ist, wobei der Ring (32) und die zusätzliche Außenschicht (27) einen Teil des Verbindungsstückes umfassen, dadurch gekennzeichnet, daß der Ring (32) an dem Verbindungsstück befestigt ist und die Befestigung schützt.

5. Verfahren des Zusammenbaus eines Schlauches (10), eines Verbindungsstückes (11) und eines Feuerschutzes, wobei der Feuerschutz einen Abschnitt einer rohrförmigen Siliziumverbindung (27), einen Abschnitt einer Metallverkleidung (28) und einen Ring (32) umfaßt, welches folgende Schritte aufweist: Befestigen eines Verbindungsstückes (11) an einem Schlauchende (10), Ziehen des Siliziumverbindungs-Abschnittes und der Verkleidung (28) über den Schlauch (10), Schieben von Verkleidung und Silikonverbindung zumindest teilweise über das Verbindungsstück (11); Anordnen des Ringes (32) um das Verbindungsstück (11) und die Verkleidung (28); Legen einer Silikonverbindungsschicht zwischen den Ring und die Verkleidung; und festes Befestigen der Hülse (32) an der Verkleidung (28) und dem Verbindungsstück (11).

FIG_1

34
17
16
19
34 — 38 36 — 31 — 32
37
33
29 27 28
20
18
10
12
11
26

FIG_2

34
33
16
19 20
32
36
31
29 27 28
18
12
26

0026431

Fig.3.